# EUROPÄISCHE PATENTANMELDUNG

(11) **EP 3 764 607 A1**
(43) Veröffentlichungstag der Anmeldung: **13.01.2021**
(21) Anmeldenummer: 19184884.5
(22) Anmeldetag: 08.07.2019
(51) Int. Cl.: H04L 12/721, G08B 13/00, H04L 12/937, H04L 29/08, H04W 84/18, H04W 88/16, H04L 12/773

(54) **KAMERA MIT BUILT-IN GATEWAY-FUNKTIONALITÄT**

(71) Anmelder: Siemens Aktiengesellschaft, 80333 München (DE)
(72) Erfinder: Laloni, Claudio, 82024 Taufkirchen (DE); Engel, Thomas, 73432 Aalen (DE)

(57) **Zusammenfassung**

Die Erfindung betrifft ein Verfahren zur Verbindung eines Sensors oder eines Aktors mit einer digitalen Kamera. Die Kamera weist eine Verarbeitungseinheit und eine Schnittstelle auf. Das Verfahren besteht darin, dass die Verarbeitungseinheit über die Schnittstelle eine direkte Verbindung mit dem Sensor bzw. Aktor erstellt.

## Beschreibung

Die Erfindung betrifft ein Verfahren zur Verbindung eines Sensor oder Aktors mit einer digitalen Kamera.

Soll eine Kamera mit einem Sensor verbunden werden, geschieht dies herkömmlicherweise mittels eines sogenannten Edge Gateways. Ein Edge Gateway ist ein separates Gerät, das die Daten des Sensors empfängt und an die Kamera weiterleitet. Soll eine Kamera mit einem Aktor verbunden werden, geschieht dies herkömmlicherweise ebenfalls mittels eines sogenannten Edge Gateways. Der Edge Gateway empfängt hierbei die Befehle der Kamera und leitet sie an den Aktor weiter. Beispiele für bekannte Edge Gateways sind die SIMATIC IoT2000, SIMATIC IoT2020, SIMATIC IoT2040 oder SIMATIC IPC127E, alle von Siemens. Ein Edge Gateway kann, muss aber nicht, bereits eine Selektion der empfangenen Daten vornehmen. Ein Edge Gateway kann die empfangenen Daten auch bereits bearbeiten und lediglich bearbeitete Daten und Informationen zwischen der Kamera und dem Sensor bzw. Aktor übermitteln.

Prinzipiell können Edge Gateways auch dazu dienen, Daten von einer Kamera zu einem Server oder in eine Cloud zu versenden.

Edge Gateways haben den Vorteil, dass sie in räumlicher Nähe zur digitalen Kamera deren Daten empfangen und an die betreffenden Empfänger weiterleiten können. Edge Gateways sind ferner oftmals so ausgestaltet, dass sie mehrere unterschiedliche Datenformate empfangen können und diese in ein standardisiertes Datenformat, das von vielen anderen IoT-Geräten oder IoT-Anwendungen gelesen bzw. verarbeitet werden kann, umwandeln können.

Es bedarf jedoch herkömmlicherweise eines eigenen Edge Gateway Geräts, um eine digitale Kamera mit einem Sensor oder Aktor zu verbinden. Das Edge Gateway Gerät muss physisch bereitgestellt und in gewissem Umfang auch unterhalten, aktualisiert und gesichert werden.

Es besteht somit der prinzipielle Wunsch, die Verbindung einer digitalen Kamera mit einem Sensor oder Aktor im Vergleich zum Stand der Technik zu vereinfachen.

Dieser Wunsch wird durch das Verfahren gemäß Anspruch 1 erfüllt. Vorteilhafte Variationen und Weiterbildungen sind in den abhängigen Ansprüchen formuliert.

Dementsprechend wird ein Verfahren zur Verbindung eines Sensors oder eines Aktors mit einer digitalen Kamera bereitgestellt. Die Kamera weist eine Verarbeitungseinheit und eine Schnittstelle auf. Das Verfahren besteht darin, dass über die Schnittstelle und mittels der Verarbeitungseinheit eine direkte Verbindung zwischen der Kamera und dem Sensor bzw. Aktor aufgebaut wird.

Zur Vereinfachung werden im Folgenden und im Rahmen dieser Patentanmeldung der Sensor und der Aktor auch als "IoT-Gerät" bezeichnet. Die Abkürzung IoT steht für "Internet of Things", das im Deutschen als "Internet der Dinge" oder "Industrie 4.0" übersetzt wird. Unter einem IoT-Gerät kann ganz allgemein ein kabelgebundenes oder drahtlos verbindbares Gerät verstanden, das Daten generiert und/oder Steuerbefehle umsetzt. Ein IoT-Gerät wird gelegentlich auch als "Edge Device" oder "Smart Edge Device" bezeichnet.

Die Verbindung der digitalen Kamera mit dem IoT-Gerät kann auch als Anbindung oder Vernetzung der digitalen Kamera mit dem IoT-Gerät bezeichnet werden. Der Zweck der Verbindung ist die Weiterleitung von Daten von der Kamera zu dem IoT-Gerät.

Unter der digitalen Kamera (auch: Digitalkamera) wird eine Vorrichtung verstanden, die Bilder von statischen oder dynamisch sich verändernden Szenen elektronisch auf einem digitalen Speichermedium aufzeichnen kann. Dabei erzeugt Licht, das auf einen Bildsensor (auch: Kamerachip oder Sensorchip) fällt, elektrischen Strom, der anschließend mittels eines Prozessors in digitale Information umgewandelt wird.

Eine digitale Kamera ist ein spezielles Beispiel eines Sensors, da eine digitale Kamera immer einen Bildsensor aufweist. Folglich umfasst die vorliegende Erfindung insbesondere die Verbindung einer (ersten) digitalen Kamera mit einer oder mehreren weiteren digitalen Kameras.

Die Verarbeitungseinheit, die die mit dem IoT-Gerät zu verbindende Kamera aufweist, ist insbesondere als Prozessor ausgestaltet, also als ein programmierbares Rechenwerk, das gemäß übergebenen Befehlen andere Maschinen oder elektrische Schaltungen steuert. Ein Prozessor wird, wenn sie den Hauptprozessor darstellt, auch als zentrale Verarbeitungseinheit *(englisch: central processing unit; CPU)* bezeichnet. Wenn der Prozessor auf die Berechnung von Graphiken spezialisiert und optimiert ist, wird er auch als Graphikprozessor *(englisch: graphics processing unit; GPU)* bezeichnet. Auch weitere Spezialprozessoren können die Verarbeitungseinheit bilden. Schließlich kann die Verarbeitungseinheit auch als integrierter Schaltkreis, in dem eine logische Schaltung geladen werden kann, realisiert sein. Letzterer wird auch als im Feld programmierbare (Logik-)Gatter-Anordnung *(englisch: Field Programmable Gate Array; FGPA)* bezeichnet.

Die Schnittstelle ermöglicht in einer ersten Ausführungsform eine drahtlose Anbindung der digitalen Kamera an das IoT-Gerät. Dafür kann die Schnittstelle beispielsweise auf dem Industriestandard Bluetooth, auf einem drahtlosen lokalen Netzwerk *(englisch: Wireless Local Area Network; WLAN)* oder auf Nahfeldkommunikation *(englisch: Near Field Communication; NFC)* basieren.

In einer zweiten Ausführungsform ermöglich die Schnittstelle eine kabelgebundene Anbindung der digitalen Kamera an das I-oT-Gerät. Ein Beispiel für eine kabelgebundene Anbindung stellt das Ethernet dar. Um eine schnelle Übertragung auch großer Datenmengen zu gewährleisten, eignet sich besonders die Verwendung eines Gigabit-Ethernets (GigE) mit einer Übertragungsrate von bis zu 1000 Megabit pro Sekunde.

Die Schnittstelle selbst kann konkret als Universal Serial Bus Port (USB-Port), Firewire-Port oder GigE-Port ausgestaltet sein. Vorteilhaft erscheint auch die Ausgestaltung der Schnittstelle als Camera Link (CL) Port, da diese speziell in der industriellen Bildverarbeitung verwendet wird und sich besonders gut für eine schnelle Bildübertragung eignet. Im Allgemeinen erscheint es vorteilhaft, standardisierte Schnittstellen mit standardisierten Protokollen, beispielsweise UPC/UA, einzusetzen.

Die Erfinder haben also erkannt, dass die Verbindung zwischen einer digitalen Kamera und einem IoT-Gerät gegenüber dem Stand der Technik erheblich vereinfacht werden kann, wenn auf eine separates Edge Gateway Gerät verzichtet wird. Statt des separaten Edge Gateway Geräts wird die Gateway-Funktionalität direkt in der Kamera realisiert. Viele heutige digitale Kameras mit einer integrierten Recheneinheit bieten von Haus aus genügend Leistung, so dass eine zusätzliche Gateway-Funktionalität ohne signifikante Leistungseinbuße möglich erscheint.

Die digitale Kamera kann somit auch als Digitalkamera mit built-in Gateway bezeichnet werden. Es existieren insbesondere keine weiteren Geräte zwischen der digitalen Kamera und dem IoT-Gerät; die beiden sind vielmehr direkt miteinander verbunden.

Eine solche digitale Kamera kann im Internet der Dinge, insbesondere im industriellen Internet der Dinge *(englisch: Industrial Internet of Things; IIoT),* auch als Knotenpunkt für andere IoT-Geräte fungieren. Es kann die Kamera also mit einem ersten IoT-Gerät und einem zweiten IoT-Gerät verbunden sein und, da sie über eine Gateway-Funktionalität verfügt, sowohl für das erste IoT-Gerät als auch für das zweite IoT-Gerät jeweils als Edge Gateway fungieren.

Ist die digitale Kamera mit mehreren IoT-Geräten verbunden, beispielsweise mehreren Sensoren, kann die Verarbeitungseinheit der Kamera die Ausgabedaten dieser Sensoren verknüpfen. Die Sensordaten werden in diesem Fall also nicht nur empfangen und weitergeleitet, sondern auch bereits in der Kamera verarbeitet. Ein solcher Prozess kann auch als "Sensordatenfusion" bezeichnet werden.

Ein erster daraus resultierender Vorteil besteht in der Reduzierung der für die Ergebnisübertragung benötigten Bandbreite. Die Bandbreite kann also schon frühzeitig, das heißt bei Weiterleitung der Daten von der Kamera zum Aktor bzw. beim Empfang der Daten vom Sensor durch die Kamera reduziert werden.

Ein zweiter Vorteil ist, dass Kontrollfunktionen im Sinn einer closed-loop control bereits in der Edge, also im Umfeld der digitalen Kamera realisiert werden können. Damit können im Prinzip sehr schnelle und effiziente Regelkreise realisiert werden.

Schließlich kann die digitale Kamera auch als Teil einer drahtlosen Mesh-Topologie, gegebenenfalls auch parallel über mehrere Funk-Frequenzen, automatisch Daten empfangen, verarbeiten und/oder weiterleiten.

Nachfolgend wird die Erfindung anhand der beigefügten Abbildungen veranschaulicht. Die Abbildungen zeigen beispielhaft und schematisch ausgewählte Ausführungsformen ohne Beschränkung des beanspruchten Schutzumfangs.

Die Abbildungen zeigen:
- Fig. 1: Vernetzung eines Sensors mit einer Kamera nach dem Stand der Technik;
- Fig. 2: Vernetzung einer Kamera mit einem Aktor nach dem Stand der Technik;
- Fig. 3: Vernetzung eines Sensors mit einer Kamera nach einer Ausführungsform der Erfindung; und
- Fig. 4: Vernetzung einer Kamera mit einem Aktor nach einer Ausführungsform der Erfindung.

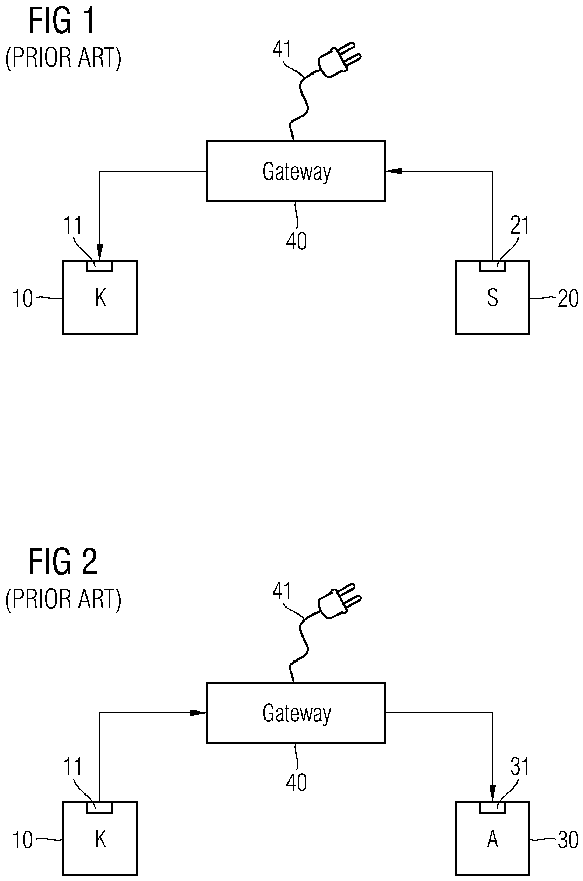

Die Abbildung 1, auch als Fig. 1 abgekürzt, zeigt eine herkömmliche Verbindung einer digitalen Kamera 10 mit einem Sensor 20.

Die Kamera 10 weist eine Schnittstelle 11 auf. Mittels ihrer Schnittstelle 11 ist die Kamera 10 mit einem ihr zugeordneten Edge Gateway Gerät 40 verbunden. Auch das Edge Gateway Gerät 40 weist eine Schnittstelle zur Verbindung mit der Kamera 10 auf, die aber aus Gründen der Übersichtlichkeit hier nicht gezeigt ist.

Der Sensor 20 weist ebenfalls eine Schnittstelle 21 auf. Mittels ihrer Schnittstelle 21 ist der Sensor 20 mit demselben Edge Gateway Gerät 40, das auch mit der Kamera verbunden ist, verbunden. Auch hier ist die Schnittstelle am Edge Gateway Gerät 40 zur Verbindung mit dem Sensor 20 aus Gründen der Übersichtlichkeit nicht gezeigt.

Möchte der Sensor 20 Daten an die Kamera 10 senden, geschieht dies via dem Edge Gateway Gerät 40. Die Verbindung kann beispielsweise mittels eines lokalen Netzwerks (LAN), das beispielsweise das Rechnernetz eines Unternehmens an einem geographischen Standort umfasst, realisiert sein. In diesem Fall ist die Schnittstelle zum Beispiel als USB-Port ausgebildet. Alternativ kann es auch vorteilhaft sein, wenn die Verbindung des Sensors 20 zum Edge Gateway Gerät 40 kabellos, also zum Beispiels über WLAN oder Bluetooth, erfolgt.

Das Edge Gateway Gerät 40 selbst ist mittels einer Verbindung 41 mit dem Internet, also z.B. mit einem Server, verbunden. Es erscheint vorteilhaft, wenn diese Verbindung kabelgebunden erfolgt, da in der Regel große Datenmengen über längere Strecken transportiert werden müssen.

Die Abbildung 2, auch als Fig. 2 abgekürzt, zeigt dieselbe Konfiguration wie in Abbildung 1, nur dass der Sensor durch einen Aktor 30 ersetzt wurde und die Datenströme statt vom Sensor zur Kamera von der Kamera 10 zum Aktor 30 laufen.

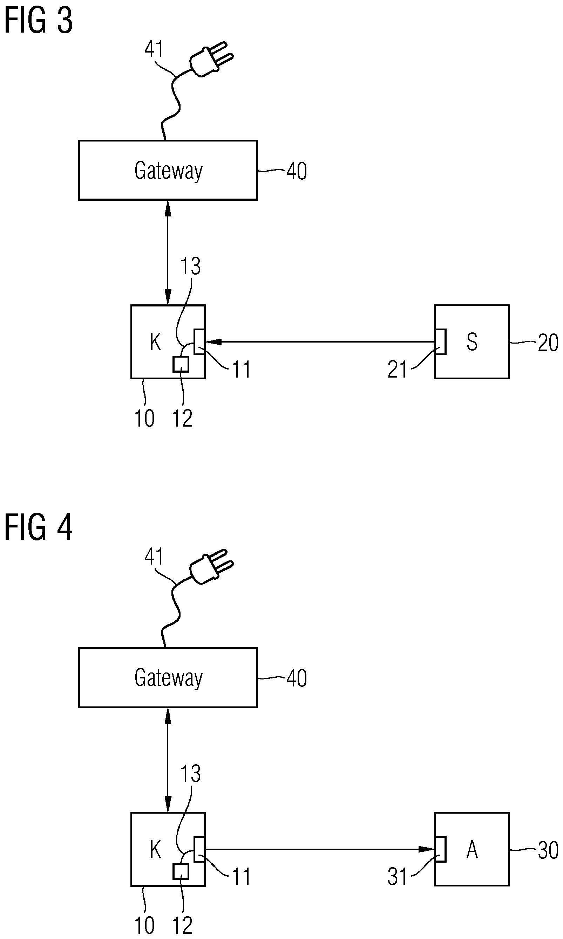

Die Abbildung 3, auch als Fig. 3 abgekürzt, zeigt eine Verbindung eines Sensors 20 mit einer Kamera 10 gemäß einer Ausführungsform der Erfindung. Im Gegensatz zum Stand der Technik ist der Sensor 20 direkt mit Kamera 10 verbunden. Die Daten des Sensors 20 werden insbesondere nicht über ein separates Edge Gateway Gerät geleitet.

Hierfür muss die Kamera 10 lediglich mit einer entsprechenden Verarbeitungseinheit 12 ausgestattet werden, die mit der Schnittstelle 11 der Kamera 10 über eine Verbindung 13 verbunden ist. In anderen Worten weist die Kamera 10 bereits die Gateway-Funktionalität auf und erfüllt die Aufgaben des bisher separat verwendeten Edge Gateway Geräts.

In der in Abbildung 3 gezeigten Ausführungsform ist die Kamera 10 selbst mit einem Edge Gateway Gerät 40 mit dem Internet verbunden. Wegen des Datenvolumens und der Länge des Übertragungswegs, wird diese Verbindung vorzugsweise kabelgebunden vorgenommen.

Wie zu sehen ist, vereinfacht das Vorsehen eines built-in Gateways in der digitalen Kamera 10 eine Verbindung der Kamera 10 mit anderen IoT-Geräten 20, 30 in einer IoT-Umgebung, insbesondere in einer industriellen IoT-Umgebung.

Die Abbildung 4, auch als Fig. 4 abgekürzt, zeigt eine ähnliche Ausführungsform wie in Abbildung 3. Der Sensor ist lediglich durch einen Aktor 30 ersetzt, der mittels einer Schnittstelle 31 direkt mit der Kamera verbunden ist und von ihr Befehle empfangen kann.

Aus Gründen der Übersichtlichkeit wurde die Erfindung anhand eines Sensors oder Aktors illustriert, die mit einer Kamera verbunden sind. Selbstverständlich lässt sich die Erfindung auch mit einer Vielzahl von Sensoren und/oder Aktoren anwenden.

## Patentansprüche

1. Verfahren zur Verbindung eines Sensors oder eines Aktors mit einer digitalen Kamera, wobei die Kamera eine Verarbeitungseinheit und eine Schnittstelle aufweist, und wobei über die Schnittstelle eine direkte Verbindung zwischen dem Sensor bzw. Aktor und der Kamera mittels der Verarbeitungseinheit aufgebaut wird.

2. Verfahren nach Anspruch 1,
wobei die Verarbeitungseinheit ein Prozessor, insbesondere eine CPU, eine GPU, ein FPGA oder ein Spezialprozessor, ist.

3. Verfahren nach einem der vorhergehenden Ansprüche,
wobei die Schnittstelle eine drahtlose Anbindung an den Sensor bzw. Aktor ermöglicht.

4. Verfahren nach einem der vorhergehenden Ansprüche,
wobei die Schnittstelle auf Bluetooth, WLAN oder NFC basiert.

5. Verfahren nach einem der Ansprüche 1 oder 2,
wobei die Schnittstelle eine kabelgebundene Anbindung an den Sensor bzw. Aktor, insbesondere mittels eines Ethernets, ermöglicht.

6. Verfahren nach einem der vorhergehenden Ansprüche,
wobei die Schnittstelle einen USB-, Firewire-, Camera Link- oder GigE-Port umfasst.

7. Verfahren nach einem der vorhergehenden Ansprüche,
wobei keine weiteren Geräte, insbesondere kein Edge Gateway Gerät, bei der Verbindung zwischen der Kamera und dem Sensor bzw. Aktor existieren.

8. Verfahren nach einem der vorhergehenden Ansprüche,
wobei die Kamera selbst mittels eines kabelgebundenen Edge Gateways mit dem Internet verbunden ist.

9. Verfahren nach einem der vorhergehenden Ansprüche,
wobei die Kamera als Knotenpunkt für eine Vielzahl von Sensoren und/oder Aktoren fungiert.

10. Verfahren nach einem der vorhergehenden Ansprüche,
wobei die Verarbeitungseinheit die Ausgabedaten mehrerer Sensoren verknüpft.

11. Verfahren nach einem der vorhergehenden Ansprüche,
wobei die Kamera als Teil einer Mesh-Topologie automatisch Datenpakete empfängt, verarbeitet und weiterleitet.
